# EUROPEAN PATENT SPECIFICATION

(11) **EP 2 916 518 B1**
(45) Date of publication and mention of the grant of the patent: **17.10.2018**
(21) Application number: 15157528.9
(22) Date of filing: 04.03.2015
(51) Int. Cl.: H04L 29/06

(54) **APPARATUSES AND METHODS FOR CERTIFICATE GENERATION, CERTIFICATE REVOCATION AND CERTIFICATE VERIFICATION**
VORRICHTUNGEN UND VERFAHREN ZUR ZERTIFIKATERZEUGUNG, ZERTIFIKATWIDERRUFUNG UND ZERTIFIKATVERIFIZIERUNG
APPAREILS ET PROCÉDÉS DE GÉNÉRATION DE CERTIFICAT, RÉVOCATION DE CERTIFICAT ET DE VÉRIFICATION DE CERTIFICAT

(30) Priority: 05.03.2014 TW 103107517; 17.02.2015 US 201514623499
(43) Date of publication of application: 09.09.2015
(73) Proprietor: Industrial Technology Research Institute, Chutung Hsinchu 31040 (TW)
(72) Inventor: Tseng, Huei-Ru, 231 New Taipei City (TW); Tsai, Pei-Chuan, 310 Hsinchu County (TW)
(74) Representative: Becker Kurig Straus

(56) References cited:
- WO-A2-2006/026737
- KOCHER P C: "ON CERTIFICATE REVOCATION AND VALIDATION", FINANCIAL CRYPTOGRAPHY. INTERNATIONAL CONFERENCE, XX, XX, 1 January 1998 (1998-01-01), pages 172-177, XP000997209,

## Description

### TECHNICAL FIELD

Embodiments of the present disclosure generally relate to certificate generation, revocation and verification apparatuses and methods for generating, revoking and verifying certificates used within network communications.

### BACKGROUND

One such solution is a public key cryptosystem. In public key cryptosystems, entities may use certificates provided by a certificate authority to ensure that messages are authentic. A certificate authority may provide an entity with a certificate identifying the entity that the entity may attach to messages to provide authentication to another entity receiving the message. Such certificates provide signature generation and verification.

In some situations, a certificate authority may need to revoke a certificate before it expires, such as when an entity's private key is compromised, when an entity device is malfunctioning, or when an entity's access is revoked. To do this, a certificate authority manages a certificate revocation list (CRL) that contains the list of the revoked certificates that it may then provide to the entities to verify the validity of received certificates.

In some networks, such as vehicular networks for example, a certificate authority may issue tens of thousands of certificates to an entity so that the entity can change the certificate in use on a frequent basis, such as to protect the privacy or identity of the entity.

In such networks, a certificate revocation list may have to list the tens of thousands of certificates issued to an entity if the certificates need to be revoked, causing the certificate revocation list to become unmanageably large and requiring significant processing burden to verify certificates. The document published as WO2006026737 discloses a method wherein certificates of a main set (F1) are grouped into subset (F2 - F4). If all the certificates within a set (or within a subset) are "valid" a single piece of information which indicates a "global validity" of the set (or subset) can be notified in order to reduce the resources needed for the notification. On the other hand, if even just one certificate within a set (or subset) is revoked (not valid), said "global validity" notification cannot be used any longer and a plurality of notifications indicating the validity of each valid certificate (on a certificate by certificate basis rather than on a global basis) must be used. Graphs representations such as trees and related computer tree traversal algorithms can be used to mark revoked nodes when a certificate is revoked, and to find all the immediate unrevoked children of the revoked nodes.

### SUMMARY

The invention is defined by the subject matter of the independent claims. Advantageous enhancements are subject to the dependent claims.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram of a certificate authorization device according to an exemplary embodiment of the present disclosure.
FIG. 2 is a block diagram of an on-board unit according to an exemplary embodiment of the present disclosure.
FIG. 3 illustrates a key tree used in certificate generation and revocation according to an exemplary embodiment of the present disclosure.
FIG. 4 illustrates a flow chart of example operations that may be used in certificate generation according to an exemplary embodiment of the present disclosure.
FIG. 5 illustrates a flow chart of example operations that may be used in certificate revocation according to an exemplary embodiment of the present disclosure.
FIG. 6 illustrates a flow chart of example operations that may be used in certificate verification according to an exemplary embodiment of the present disclosure.
FIG. 7 illustrates a schematic overview of operations for certificate verification according to an exemplary embodiment of the present disclosure.

### DESCRIPTION OF THE EMBODIMENTS

Reference will now be made in detail to the disclosed embodiments of the disclosure, examples of which are illustrated in the accompanying drawings. Wherever possible, the same reference numbers are used in the drawings and the description to refer to the same or like parts.

Many modifications and other embodiments of the disclosure set forth herein will come to mind to one skilled in the art to which these disclosure pertain having the benefit of the teachings presented in the foregoing descriptions and the associated drawings. Therefore, it is to be understood that the disclosure are not to be limited to the specific embodiments disclosed and that modifications and other embodiments are intended to be included within the scope of the appended claims. Although specific terms are employed herein, they are used in a generic and descriptive sense only and not for purposes of limitation.

In public key cryptosystems, entities may use certificates provided by a certificate authority/certificate authorization device (hereinafter abbreviated as CA) to ensure that messages are authentic and senders are trustworthy. A CA may provide an entity with one or more certificates identifying the entity that the entity may attach to messages to provide authentication to another entity receiving the message.

In such systems, a CA and an entity may agree on a secret value that may be used in the generation of the certificates. The CA may generate a series of public/private key pairs for the entity and generate certificates using the public/private key pairs, which the CA then provides to the entity for use in network communications.

When a CA needs to revoke a certificate prior to the expiration of the certificate, such as when an entity's private key is compromised, an entity malfunctions, or access is revoked for an entity, the CA may add the certificate information to a certificate revocation list (CRL) that is provided to all the entities in the network. The entities may use the CRL to verify the validity of a certificate it receives along with a message.

In some systems, a CA may issue a very large number of certificates (e.g. tens of thousands of certificates) to each entity to allow the entity to frequently change the certificate in use, such as to provide improved security and privacy protection for the entities.

In some examples, when a CA revokes certificates in use, it must add the certificate hash value for each certificate, along with other associated data, to the CRL. As such, in systems where each entity has very large numbers of certificates, the CRL becomes inefficient as it rapidly increases in size and requires increasingly more processing resources to verify certificate validity.

In another example, when a CA revokes certificates in use, it adds the secret value used for generation of the entity's certificates, along with other data, to the CRL. In such systems, when the CA adds the secret value to the CRL it discloses all the entity's certificates and may also compromise the privacy of the entity.

One example of such a communication network is an Intelligent Transportation System (ITS). An ITS provides monitoring and management of a transportation system to more effectively use the limited resources and reduce congestion, delays, and costs. In an ITS, vehicles are equipped with an on-board unit (OBU) and wireless communication devices. The OBU may then communicate with nearby vehicles and road-side units (RSU) and participate in the ITS. In such networks, the OBUs and RSUs may use public key cryptosystems to ensure the authenticity and correctness of the messages being exchanged.

In such an ITS, a CA may issue tens of thousands of certificates to each OBU so that the OBU may frequently change the certificate in use, such as every ten minutes for example. Frequently changing the certificate in use for a vehicle may provide privacy protection for the actual identity of the vehicles participating in the ITS.

Embodiments of the present disclosure provide generation, revocation, and validation of certificates that meet the needs for authentication and privacy, and may reduce the resources required to maintain the certificate revocation list.

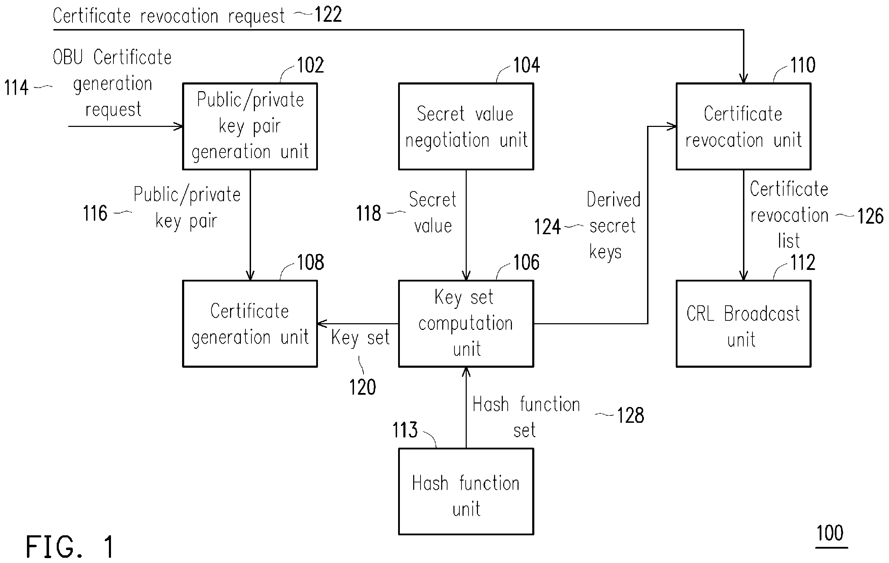

FIG. 1 is a block diagram of a certificate authority/ certificate authorization device (CA) 100 according to an exemplary embodiment of the present disclosure. Referring to FIG. 1, the CA 100 may include a public/private key pair generation unit 102, a secret value negotiation unit 104, a key set computation unit 106, a certificate generation unit 108, a certificate revocation unit 110, a CRL broadcast unit 112, and a hash function unit 113.

In an exemplary embodiment, the CA 100 may receive a certificate generation request 114 from an entity. The public/private key pair generation unit 102 may then generate a number of public/private key pairs for the requesting entity and send the public/private key pairs 116 to the certificate generation unit 108.

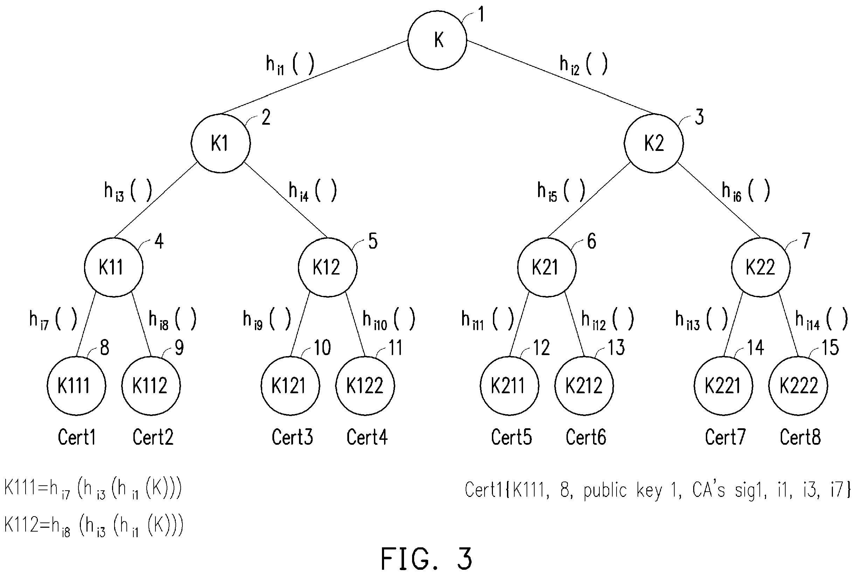

The secret value negotiation unit 104 may determine a secret value 118, e.g. K, between the CA 100 and the requesting entity. The secret value negotiation unit 104 may then send the secret value 118 to the key set computation unit 106. The hash function unit 113 may generate a hash function set 128 including randomly selected hash functions and send the hash function set 128 to the key set computation unit 106. The key set computation unit 106 may then generate a derived key set by constructing a key tree, as subsequently described in FIG. 3, with a root node of the secret value 118 ("K"), and each edge of the key tree is represented by different randomly selected hash functions of the hash function set 128. The key set computation unit 106 may then send the derived key set 120 to the certificate generation unit 108.

The certificate generation unit 108 may then use the public/private key pairs 116 and the derived key set 120 to generate the certificates for use by the requesting entity. In an exemplary embodiment, a generated certificate may comprise a derived secret key from a leaf of the key tree, an index of the derived secret key, a public key for the entity, a CA signature, and at least one index of at least one randomly selected hash function of the hash function set 128. The CA 100 may then send the series of certificates to the requesting entity for use in securing and authenticating messages. In an exemplary embodiments, the generated certificates are unrelated and not linked together and cannot be used to trace the actual identity of the entity.

The CA 100 may, at some later time, determine a need to revoke one or more unexpired certificates previously generated for an entity. Additionally or alternatively, the CA 100 may receive an indication that one or more of an entity's unexpired certificates should be revoked. The CA 100 may then cause a certificate revocation request 122 to be generated and provided to certificate revocation unit 110. The certificate revocation unit 110 may determine the certificates that need to be revoked and the key set computation unit 106 determines the derived secret keys 124 corresponding to a revoked certificate set (i.e., at least one common parent value of a minimum number of sub-trees comprising only a portion of the leaves corresponding to the revoked certificate set). The certificate revocation unit 110 may then use the derived secret keys 124 to update a certificate revocation list (CRL), which is originally kept in the certificate revocation unit 110 for storing certificate revocation information, by causing the derived secret keys 124 along with other associated data to be added to the CRL. In an exemplary embodiment, the certificate revocation unit 110 may add an entry to the CRL for each of the identified derived secret keys, wherein the entry comprises an index of the derived secret key (e.g., the index of the key tree node containing the derived secret key), the derived secret key, and the height of the key tree node containing the derived secret key.

The certificate revocation unit 110 may provide the updated CRL 126 to the CRL broadcast unit 112 which may then cause the CRL to be periodically transmitted to one or more entities within the network. The entities may use the CRL in determining whether received certificates are valid or revoked.

In some embodiments, the CA 100 may be a centralized server providing certificate generation and revocation service. The public/private key pair generation unit 102, the secret value negotiation unit 104, the key set computation unit 106, the certificate generation unit 108, the certificate revocation unit 110, the CRL broadcast unit 112, and the hash function unit 113 may be program codes implemented in form of software or firmware. However, the present disclosure is not limited thereto. The public/private key pair generation unit 102, the secret value negotiation unit 104, the key set computation unit 106, the certificate generation unit 108, the certificate revocation unit 110, the CRL broadcast unit 112, and the hash function unit 113 may be implemented as computation circuits. The public/private key pair generation unit 102, the secret value negotiation unit 104, the certificate revocation unit 110, the CRL broadcast unit 112 may couple to a communication unit (not shown) to transmit data to an entity or receive data from the entity. In another embodiment, a communication unit (not shown) may be implemented in the public/private key pair generation unit 102, the secret value negotiation unit 104, the certificate revocation unit 110 or the CRL broadcast unit 112 to transmit data to an entity or receive data from the entity.

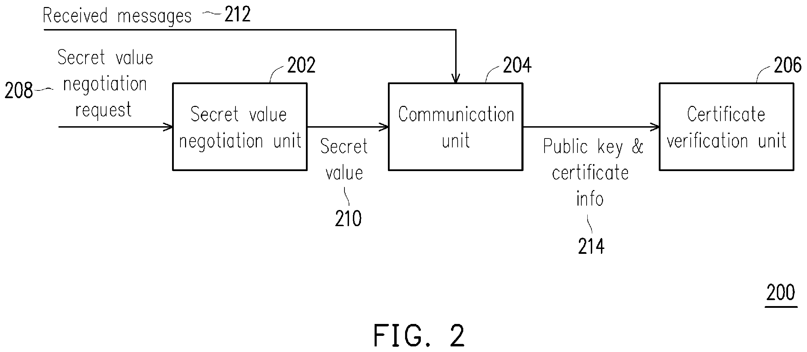

FIG. 2 is a block diagram of an on-board unit 200 according to an exemplary embodiment of the present disclosure. In an exemplary embodiment, the on-board unit 200 may comprise at least a secret value negotiation unit 202, a communication unit 204, and a certificate verification unit 206.

The secret value negotiation unit 202 may receive a secret value negotiation request 208 as part of the operations of requesting certificates from the CA 100, such as described in FIG. 1. The secret value negotiation unit 202 may determine a secret value, e.g. K, and provide the secret value 210 to the communication unit 204 to cause transmission of the secret value to the CA 100 (or e.g. the secret value negotiation unit 104) for use in certificate generation. The entity may transmit and receive data through the communication unit 204, such as receiving generated certificates from the CA 100 (or e.g. the certificate generation unit 108), receiving the CRL from the CA 100 (or e.g. the CRL broadcast unit 112), as well as transmitting and receiving messages to and from other entities in the network.

The communication unit 204 may periodically receive the CRL from the CA 100 (or e.g. the CRL broadcast unit 112) and send it to the certificate verification unit 206 for use in certificate verification of received messages.

The communication unit 204 may receive messages from other entities in the network. The received messages 212 may comprise message data, a message signature (e.g., signature of the sending entity generated using its private key), and a certificate from the sending entity. The communication unit 204 may send the received certificate information 214 to the certificate verification unit 206 to determine if the received certificate is valid or revoked.

The certificate verification unit 206 may calculate and compare information derived from the received certificate and the CRL to determine if the received certificate has been revoked. If the certificate verification unit 206 determines that the received certificate has been revoked, it may provide an indication that the message should be disregarded.

In some embodiments, the on-board unit 200 may be an electronic device installed on a vehicle that performs certificate verification operation. The secret value negotiation unit 202 and the certification verification unit 206 may be program codes implemented in form of software or firmware. However, the present disclosure is not limited thereto. The secret value negotiation unit 202 and the certification verification unit 206 may be implemented as computation circuits. The communication unit 204 may be a communication chip that supports one of global system for mobile communication (GSM), personal handy-phone system (PHS), code division multiple access (CDMA) system, wireless fidelity (Wi-Fi) system, worldwide interoperability for microwave access (WiMax) system, 3^{rd} generation (3G), dedicated short-range communications (DSRC) or long-term evolution (LTE) system, or any two or more combinations of the above thereof.

FIG. 3 illustrates a key tree used in certificate generation and revocation according to an exemplary embodiment of the present disclosure. In an exemplary embodiment, a CA 100 (or e.g. the secret value negotiation unit 104) and an entity may agree upon a secret value, K, for use in generating certificates for the entity. The CA 100 (or e.g. the key set computation unit 106) may then perform operations to construct a key tree whose root's value is the secret value K. The CA 100 (or e.g. the certificate generation unit 108) may then use the derived secret keys of the key tree leaves in the generation of the certificates.

In an exemplary embodiment, the CA 100 (or e.g. the key set computation unit 106) may construct a binary key tree by using randomly selected hash functions to generate the children of each corresponding parent node. For example, the CA 100 (or e.g. the key set computation unit 106) may generate each node by applying different randomly selected hash functions to the value of the corresponding the parent node. Although the exemplary embodiment describes a binary key tree using different randomly selected hash functions, other types of key trees may also be constructed using different randomly selected hash functions, such as a tertiary key tree using different randomly selected hash functions to generate the children nodes of each parent node, or an n-ary key tree using different randomly selected hash functions to generate the children nodes of each parent node.

As shown in FIG. 3, the CA 100 (or e.g. the key set computation unit 106) constructs an example key tree for eight certificates starting from root node 1 of the key tree using the secret value K. The CA 100 (or e.g. the key set computation unit 106) may generate a left child node 2 of the root node 1 by applying a randomly selected hash function hᵢ₁() to the root value K to calculate derived secret key K1. The CA 100 (or e.g. the key set computation unit 106) may generate a right child node 3 of the root node 1 by applying another randomly selected hash function, hᵢ₂() to the root value K to calculate derived secret key K2.

In the same manner, the CA 100 (or e.g. the key set computation unit 106) may generate node 4 to node 7 by applying randomly selected hash functions hᵢ₃() to hᵢ₆() respectively to the parents' value K1 and K2 to calculate derived secret keys K11, K12, K21 and K22. The CA 100 (or e.g. the key set computation unit 106) may further generate node 8 to node 15 by applying randomly selected hash functions hᵢ₇() to hᵢ₁₄() respectively to the parents' value K11, K12, K21 and K22 to calculate derived secret keys K111 to K222.

The CA 100 (or e.g. the certificate generation unit 108) may then use the derived values of the leaf nodes to generate the certificates. For example, the CA 100 (or e.g. the certificate generation unit 108) may use derived secret key K111 to generate the first certificate, Cert1; use the derived secret key K112 to generate the second certificate, Cert2; use derived secret key K121 to generate the third certificate, Cert3; use derived secret key K122 to generate the fourth certificate, Cert4; use derived secret key K211 to generate the fifth certificate, Cert5; use derived secret key K212 to generate the sixth certificate, Cert6; use derived secret key K221 to generate the seventh certificate, Cert7; and use derived secret key K222 to generate the eighth certificate, Cert8.

In the described exemplary embodiment, the first certificate, Cert1, may include the derived secret key Kill, the node index 8, the entity public key 1, the CA signature 1, and hash function indices i1, i3, i7. As described in an exemplary embodiment, it is difficult to derive the original secret value K from the certificate derived secret key.

In some embodiments, before construction of the key tree, the CA 100 (or e.g. the key set computation unit 106) determines the height of the key tree by the number of the certificates required by the entity.

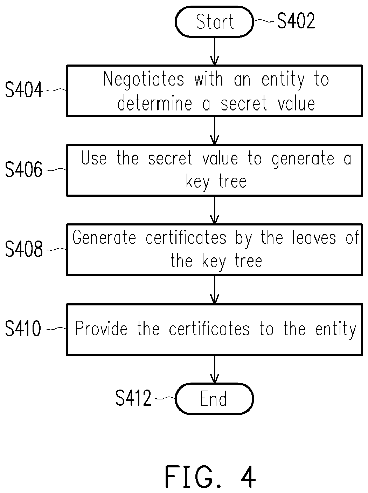

FIG. 4 illustrates a flow chart of example operations that may be used in certificate generation according to an exemplary embodiment of the present disclosure. A CA 100 may perform certificate generation by starting operation, such as shown in step S402.

As shown at step S404, the CA 100 (or e.g. the secret value negotiation unit 104) may negotiate with an entity to determine a secret value to be used for generation of a key tree and certificates for the entity. At step S406, the CA 100 (or e.g. the key set computation unit 106) may then use the secret value to generate a key tree, such as the key tree described in regard to FIG. 3 above.

As shown at step S408, the CA 100 (or e.g. the certificate generation unit 108) may then use the key tree in generating certificates for the entity. For example, the CA 100 (or e.g. the certificate generation unit 108) may use the derived secret key of each of the leaves of the key tree, as well as the entity's public keys and the CA's private key, to generate the set of certificates for the entity. The CA 100 (or e.g. the certificate generation unit 108) may then provide the certificates to the entity, such as shown at step S410. The operation then continues to step S412 and ends.

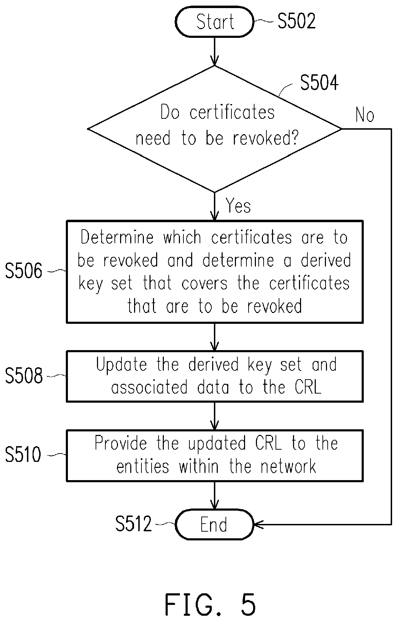

FIG. 5 illustrates a flow chart of example operations that may be used in certificate revocation according to an exemplary embodiment of the present disclosure. A CA 100 may perform certificate revocation by starting operation, such as shown instep S502.

As shown at step S504, the CA 100 may determine whether there are certificates that should be revoked. If there are no certificates to be revoked, the operation may continue to step S512 and end. If the CA 100 determines that there are certificates to be revoked, the operation may continue to step S506.

As shown in step S506, the CA 100 (or e.g. the key set computation unit 106) may determine which certificates are to be revoked and may determine a derived key set that covers the certificates that are to be revoked. For example, the CA 100 (or e.g. the key set computation unit 106) may use the key tree to determine the at least one common parent node of the key tree's least sub-trees that includes only the revoked certificates.

As shown in step S508, the CA 100 (or e.g. the certificate revocation unit 110) may update the derived key set and associated data to the CRL. The CA 100 (or e.g. the CRL broadcast unit 112) may then provide the updated CRL to the entities within the network, such as shown at step S510. The operation then continues to step S512 and ends.

In an exemplary embodiment, using the key tree of FIG. 3, the CA 100 (or e.g. the key set computation unit 106) may determine that certificates 3 through 8 should be revoked. The CA 100 (or e.g. the key set computation unit 106) may determine that derived secret key K12 at node 5 covers certificates 3 and 4 and derived secret key K2 at node 3 covers certificates 5 through 8.

The CA 100 (or e.g. the certificate revocation unit 110) may then add the set of derived secret keys and the corresponding index and height to the CRL. For example, the CA 100 (or e.g. the certificate revocation unit 110) may cause two entries to be added to the CRL; a first entry comprising index 5, derived secret key K12, and height 1 (indicating that a node having the derived secret key K12 has a height of 1 up from its leaf node); and a second entry comprising index 3, derived secret key K2, and height 2. As such, in the example embodiment, the CA 100 (or e.g. the certificate revocation unit 110) may only add two entries to the CRL to cover the six revoked certificates, rather than adding entries for each of the six certificates. The CA 100 (or e.g. the CRL broadcast unit 112) may then cause the CRL to be sent to the entities in the network when the CRL is updated and may also cause the CRL to be sent to the entities on a periodic basis.

In an exemplary embodiment, a first entity may cause a message to be sent to a second entity. When the second entity receives the message, the second entity may verify the validity of the first entity's certificate included with the received message data. In an exemplary embodiment, the second entity may verify the certificate validity by checking the index of the certificate and the parent indices of the certificate against the CRL. The second entity may compute a hashed derived secret key based on hash functions indices of the certificate and the derived secret key on the CRL and compare the hashed derived secret key with the derived secret key of the certificate. If the second entity finds a match to the values on the CRL, the second entity may disregard the received message.

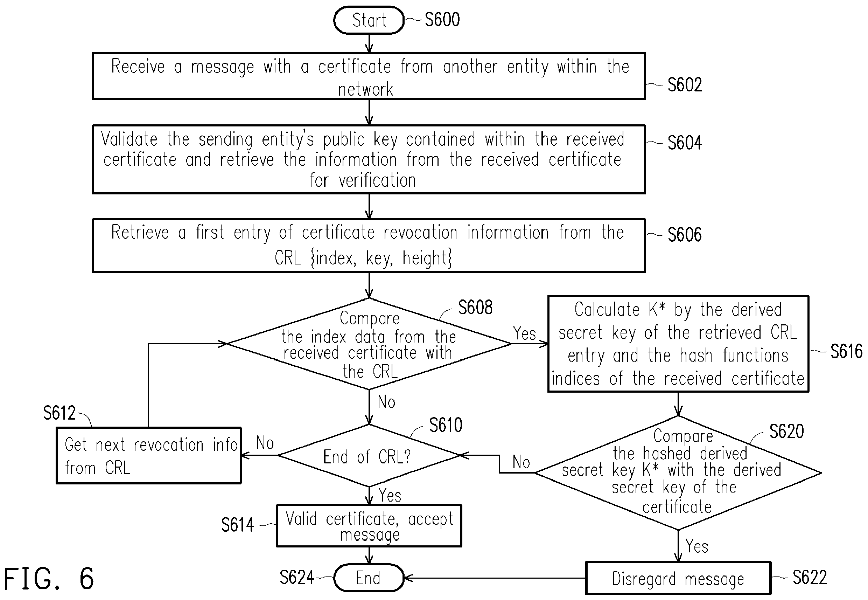

FIG. 6 illustrates a flow chart of example operations that may be used in certificate verification according to an exemplary embodiment of the present disclosure. An entity may begin operations for certificate verification such as shown at step S600. As shown in step S602 an entity may receive a message with a certificate from another entity within the network.

As shown in step S604, the receiving entity may validate the sending entity's public key contained within the received certificate and retrieve the information from the received certificate for verification. In an embodiment, the receiving entity may retrieve the derived secret key and the index from the received certificate.

As shown in step S606 the receiving entity may then retrieve a first entry of certificate revocation information from the CRL. In an embodiment, the receiving entity may retrieve the first entry comprising an index, derived secret key, and height from the CRL. For example, the receiving entity may retrieve a first entry from the CRL comprising index 3, derived secret key K2, and height 2.

The receiving entity may then compare the index data from the received certificate with the CRL, as shown in step S608. For example, if the receiving entity receives certificate Cert2 {K112, 9, public key 2, CA signature 2, i1, i3, i8} having index 9 as described in FIG. 3, the receiving entity may divide the certificate index by the dimension of the key tree (e.g., dividing by 2 for a binary tree) and perform the floor operation. Because the height of the first entry of CRL is 2 (i.e., there are 2 edges between the node with derived secret key K2 and the leaf nodes representing the certificates), the division and floor operation has to be performed twice to determine whether certificate Cert2 is a leaf of a sub-tree having the root K2. For example, floor(9/2)=4, and floor(4/2)=2. If the calculated index value (e.g., 2) does not match the index (e.g., 3) of certificate revocation information from the CRL, the operation may continue to step S610.

As shown in step S610, the receiving entity may then determine if there are more entries in the CRL that should be compared. If there are additional entries on the CRL, operation continues to step S612 where the next certificate revocation information is retrieved from the CRL. Operation then returns to step S608. If there are no more entries on the CRL, operation continues to step S614.

For example, the receiving entity may compare the calculated index value 2 of the received certificate with the the CRL entry index of 3 and since the calculated index value do not match the retrieved CRL entry index, the receiving entity may then check to see if there are more entries on the CRL and if so, repeat the comparison operation.

As shown in step S614, if the received certificate does not match any entry on the CRL, the certificate may be indicated as valid and the receiving entity may accept the message. Operation may then continue to step S624 and end.

At step S608, if the index data does match the certificate revocation information from the CRL, the operation may continue to step S616.

For example, if the receiving entity receives certificate Cert5 having index 12 and derived secret key K211, as described in FIG. 3, the receiving entity may determine the calculated index 3 (e.g., floor(12/2)=6, and floor(6/2)=3) matching the CRL entry index of 3.

As shown in step S616, the receiving entity may calculate K* by the derived secret key of the retrieved CRL entry and the hash functions indices of the received certificate. For example, using certificate Cert5 {K211, 12, public key 5, CA signature 5, i2, i5, i11}, the receiving entity calculates K* by selecting the last 2 hash function indices of certificate Cert5 (according to height 2 of the first entry of CRL) and perform hash operations on the derived key secret K2 of the first entry of CRL. For example, K* = hᵢ₁₁(hᵢ₅(K2)).

In some embodiments, the entity and the CA 100 (or e.g. the hash function unit 113) may share the same hash function pool including a plurality of randomly selected hash functions, wherein the same hash function in the hash function pools of the CA 100 (or e.g. the hash function unit 113) and the entity may have an identical hash function index. When calculating K*, the entity may refer to the hash function indices in the certificate, for example, i5 and i11, and may then use the indices to retrieve the corresponding hash functions hᵢ₅() and 1ᵢ₁₁() stored in the hash function pool of the entity. Consequently, K* is derived by hash functions hᵢ₅() and hᵢ₁₁(), and the derived secret key K2.

As shown in step S620, the receiving entity may compare the hashed derived secret key K* with the derived secret key of the certificate. If the keys match, the operation continues to step S622 where the received certificate may be indicated as revoked and the receiving entity may disregard the message. Operation may then continue to step S624 and end. For example, if the hashed derived secret key K* matches the certificate Cert5's derived secret key of K211, the receiving entity determines that certificate Cert5 has been revoked.

At step S620, if the hashed derived key K* and the derived secret key of the certificate do not match, operation may continue to step S610. As shown in step S610, the receiving entity may then determine if there are more entries in the CRL that should be compared. If there are additional entries on the CRL, operation continues to step S612 where the next certificate revocation information is retrieved from the CRL. Operation then returns to step S608. If there are no more entries on the CRL, operation continues to step S614.

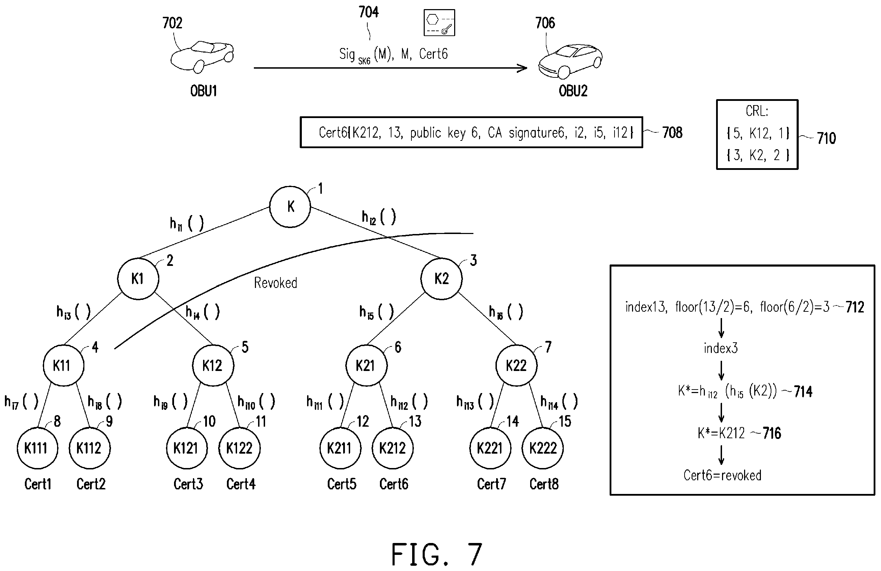

FIG. 7 illustrates a schematic overview of operations for certificate verification according to an exemplary embodiment of the present disclosure.

As shown in FIG. 7, a first entity, such as entity 702, may send a message 704 to a second entity, such as entity 706. The message 704 may have been generated by entity 702 and include a message signature, SigSK6(M), generated using the private key 6 of entity 702, the message data M, and certificate Cert6 of entity 702.

Entity 706 may then retrieve the certificate data from certificate Cert6 708 including derived secret key K212 and index 13 for use in validating the certificate. Entity 706 may have previously received the CRL 710 from the CA 100 (or e.g. the CRL broadcast unit 112) comprising entries of {index 5, derived secret key K12, height 1} and {index 3, derived secret key K2, height 2}.

For each entry on the CRL 710, entity 706 may then compute the index, as shown at 712, for certificate Cert6. Entity 706 may then compare the computed index with the entries on CRL 710 and determine that index 3 is on the second entry of CRL 710. Entity 706 may then compute a hashed derived secret key K* using the key of CRL 710 and the hash function indices of the certificate Cert6 708, as shown at 714. Entity 706 may then compare the hashed derived secret key K* with the derived secret key of certificate Cert6, K212, and determine that the keys match, as shown at 716. Entity 706 may then determine that certificate Cert6 has been revoked and disregard the message from entity 702.

As described above, the certificate generation and verification methods of the present disclosure construct a key tree for each entity and each key node of the key tree is generated by a randomly selected hash function. The certificates are generated by the leaf nodes of the key tree. When a set of certificates are revoked, instead of storing the hashed values of all the revoked certificates in the certificate revocation list, only the roots of the least sub-trees covering the revoked certificates are recorded in the certificate revocation list. In this manner, the size of the certificate revocation list is reduced while the identity of an on-board unit would not be identified by the certificate revocation list, and the multiple certificates of the same on-board unit do not relate to each other.

## Claims

1. A certificate authorization device (100), comprising:
a public/private key generation unit (102) generating public/private key pairs (116);
a secret value negotiation unit (104) negotiating a secret value (118) with an entity, wherein the secret value (118) is a key contained in a root node of a key tree; wherein the key tree consists of the root node and a plurality of sub-nodes;
wherein each sub-node contains a key;
a hash function unit (113) generating a hash function set (128);
a key set computation unit (106) receiving the secret value (118) from the secret value negotiation unit (104) and receiving the hash function set (128) from the hash function unit (113), wherein the key set computation unit (106) generates a derived key set (120) of the entity,
wherein said derived key set (120) consists of a plurality of keys derived from the secret value (118) and the hash function set (128);
and wherein the keys contained in the plurality of sub-nodes are respectively the plurality of keys of the derived key set (120); a certificate generation unit (108) receiving the public/private key pairs (116) from the public/private key generation unit (102) and the derived key set (120) from the key set computation unit (106), wherein the certificate generation unit (108) generates for each leaf node of the key tree a corresponding certificate;
wherein each certificate comprises the key contained in its corresponding leaf node, an index of its corresponding leaf node, a public key of the public/private key pairs, a certificate authority signature and one or more indexes of one or more hash functions of the hash function set (128) from which the key contained in its corresponding leaf node is derived;
a certificate revocation unit (110) acquiring at least one derived secret key contained in at least one common parent node of a minimum number of sub-trees whose leaf-nodes only correspond to revoked certificates of a revoked certificate set, and updating a certificate revocation list (126) by adding said at least one derived secret key, the index of said at least one common parent node and a height of said at least one common parent node; and
a certificate revocation list broadcast unit (112) receiving the certificate revocation list (126) and broadcasting the certificate revocation list (126),
wherein the derived secret key of each of the sub-nodes is generated by applying a randomly selected hash function of the hash function set (128) to the key contained in the parent node of said sub-node; and
wherein said common parent node is not the root node of the key tree.

2. The certificate authorization device according to claim 1, wherein the key set computation unit (106) determines a height of the key tree by the number of the certificates required by the entity.

3. An on-board unit (200), comprising:
a secret value negotiation unit (202) negotiating a secret value (118, 210) with a certificate authorization device (100);
a communication unit (204) transferring the secret value (118, 210) to the certificate authorization device (100), receiving a message (212, 704) comprising a certificate from an entity, and receiving a certificate revocation list (126) from the certificate authorization device (100); and
a certificate verification unit (206) determining whether the certificate is revoked by comparing the certificate with the certificate revocation list (126),
wherein the secret value (118, 210) is a key contained in a root node of a key tree, wherein the key tree consists of the root node and a plurality of sub-nodes;
wherein the certificate corresponds to a leaf node of the key tree;
wherein each sub-node contains a key which is derived by applying a randomly selected hash function of a hash function set (128) to the key contained in its parent node;
wherein the certificate comprises a derived key contained in its corresponding leaf-node of the key tree, an index of the leaf-node, a public key of the public/private key pairs, a certificate authority signature and one or more indexes of one ore more randomly selected hash functions of the hash function set from which the key contained in the leaf-node is derived;
wherein each entry of the certificate revocation list comprises a derived secret key, an index of the parent node of the key tree which contains the derived secret key and a height the parent node which contains the derived secret key; wherein said parent node is not the root node of the key tree.

4. The on-board unit according to claim 3, wherein the certificate verification unit (206) determines whether the index in the certificate is covered in the certificate revocation list (126),
if the index in the certificate is not covered in the certificate revocation list (126), the certificate verification unit (206) identifies that the certificate is indicated valid and the message is accepted; and
if the index in the certificate is covered in the certificate revocation list (126), the certificate verification unit (206) compares said derived key included in the certificate with a hashed value of said derived secret key included in the certification revocation list (126) hashed by the one or more hash functions whose indexes are included in the certificate, and if the derived key in the certificate matches the hashed value, the certificate verification unit (206) identifies that the certificate is revoked and the message is disregarded.

5. A certificate revocation method, comprising:
receiving a revoked certificate set;
acquiring at least one derived secret key contained in a key tree,
wherein the key tree consists of a root node and a plurality of sub-nodes;
wherein each leaf-node of the key tree has a corresponding certificate;
wherein each sub-node contains a key which is derived by applying a randomly selected hash function of a hash function set (128) to the key contained in its parent node;
wherein said at least one derived secret key is contained in at least one common parent node of the key tree, wherein said at least one common parent node is not the root node;
and updating a certificate revocation list (126) by adding said at least one derived secret key, the index of said at least one common parent node and a height of said at least one common parent node; and
broadcasting the certificate revocation list (126) to a plurality of entities,
wherein said at least one common parent node is at least one common parent node of a minimum number of sub-trees whose leaf nodes only correspond to revoked certificates of the revoked certificate set.

6. The certificate revocation method according to claim 5, wherein each entry of the certificate revocation list (126) comprises a derived secret key, an index of the common parent node and a height of the common parent node.

7. A certificate verification method, comprising:
receiving a message (212, 704) comprising a certificate from an entity (702), and receiving a certificate revocation list (126) from a certificate authorization device (100);
determining whether the certificate is revoked by comparing the certificate with the certificate revocation list (126); and
accepting the message (212, 704) if the certificate is not revoked, and disregarding the message (212, 704) if the certificate is revoked, wherein the key tree consists of a root node and a plurality of sub-nodes;
wherein the certificate corresponds to a leaf node of the key tree;
wherein each sub-node contains a key which is derived by applying a randomly selected hash function of a hash function set (128) to the key contained in its parent node;
wherein the certificate comprises a derived key contained in its corresponding leaf-node of the key tree, an index of the leaf-node, a public key of the public/private key pairs, a certificate authority signature and one or more indexes of one ore more randomly selected hash functions of the hash function set from which the key contained in the leaf-node is derived;
wherein each entry of the certificate revocation list comprises a derived secret key, an index of the parent node of the key tree which contains the derived secret key and a height the parent node which contains the derived secret key; wherein said parent node is not the root node of the key tree.

8. The certificate verification method according to claim 7, further comprising:
determining whether the index in the certificate is covered in the certificate revocation list (126):
if the index is not covered in the certificate revocation list (126), the certificate is indicated valid and the message (212, 704) is accepted; and
if the index is covered in the certificate revocation list (126), comparing said derived key included in the certificate with a hashed value of said derived secret key in the certification revocation list (126) hashed by the one or more hash functions whose indexes are included in the certificate, and if the derived key in the certificate matches the hashed value, the certificate is revoked and the message (212, 704) is disregarded.

## Patentansprüche

1. Zertifikatautorisierungsvorrichtung (100), umfassend:
eine öffentlich/privat-Schlüsselerzeugungseinheit (102), die öffentliche/private Schlüsselpaare (116) erzeugt;
eine Geheimwertaushandlungseinheit (104), die einen geheimen Wert (118) mit einer Entität aushandelt, wobei der geheime Wert (118) ein Schlüssel ist, der in einem Wurzelknoten eines Schlüsselbaums enthalten ist, wobei der Schlüsselbaum aus dem Wurzelknoten und einer Vielzahl von Unterknoten besteht, wobei jeder Unterknoten einen Schlüssel enthält;
eine Hash-Funktionseinheit (113), die einen Hash-Funktionssatz (128) erzeugt;
eine Schlüsselsatzberechnungseinheit (106), die den geheimen Wert (118) von der Geheimwertaushandlungseinheit (104) empfängt und den Hash - Funktionssatz (128) von der Hash-Funktionseinheit (113) empfängt, wobei die Schlüsselsatzberechnungseinheit (106) einen abgeleiteten Schlüsselsatz (120) der Entität erzeugt, wobei der abgeleitete Schlüsselsatz (120) aus einer Vielzahl von Schlüsseln besteht, die von dem geheimen Wert (118) und den Hash - Funktionssatz (128) abgeleitet wurden; und wobei die Schlüssel, die in der Vielzahl von Unterknoten enthalten sind, jeweils die Vielzahl von Schlüsseln des abgeleiteten Schlüsselsatzes (120) sind;
eine Zertifikatserzeugungseinheit (108), die die öffentlichen/privaten Schlüsselpaare (116) von der öffentlich/privat-Schlüsselerzeugungseinheit (102) und den abgeleiteten Schlüsselsatz (120) von der Schlüsselsatzberechnungseinheit (106) empfängt, wobei die Zertifikatserzeugungseinheit (108) für jeden Blattknoten des Schlüsselbaums ein entsprechendes Zertifikat erzeugt;
wobei jedes Zertifikat umfasst den Schlüssel, der in seinem entsprechenden Blattknoten enthalten ist, einen Index seines entsprechenden Blattknotens, einen öffentlichen Schlüssel des öffentlichen/privaten Schlüsselpaares, eine Zertifikatautoritätssignatur und einen oder mehrere Indices einer oder mehrere Hash-Funktionen des Hash-Funktionssatzes (128), von dem der Schlüssel abgeleitet wird, der in seinem entsprechenden Blattknoten enthalten ist;
eine Zertifikatswiderrufseinheit (110), die mindestens einen abgeleiteten geheimen Schlüssel erlangt, der in wenigstens einem gemeinsamen Elterknoten einer minimalen Anzahl von Unterbäumen enthalten ist, deren Blattknoten nur widerrufenen Zertifikaten eines Satzes widerrufener Zertifikate entsprechen, und die eine Zertifikatswiderrufsliste (126) aktualisiert, durch Hinzufügen des wenigstens einen abgeleiteten geheimen Schlüssels, des Index des wenigstens einen gemeinsamen Elterknotens und einer Höhe des wenigstens einen gemeinsamen Elterknotens; und
eine Zertifikatswiderrufslisten-Rundsendeeinheit (112), die die Zertifikatswiderrufsliste (126) empfängt und die Zertifikatswiderrufsliste (126) ausstrahlt,
wobei der abgeleitete geheime Schlüssel von jedem der Unterknoten erzeugt wird durch Anwenden einer zufällig ausgewählten Hash-Funktion des Hash-Funktionssatzes (128) auf den Schlüssel, der in dem Elterknoten des Unterknotens enthalten ist; und wobei der gemeinsame Elterknoten nicht der Wurzelknoten des Schlüsselbaums ist.

2. Zertifikatsautorisierungsvorrichtung nach Anspruch 1, wobei die Schlüsselsatzberechnungseinheit (106) eine Höhe des Schlüsselbaums bestimmt durch die Anzahl der von der Entität benötigten Zertifikate.

3. On-Board-Einheit (200), umfassend:
eine Geheimwertaushandlungseinheit (202), die einen geheimen Wert (118, 210) mit einer Zertifikatautorisierungsvorrichtung (100) aushandelt;
eine Kommunikationseinheit (204), die den geheimen Wert (118, 210) an die Zertifikatautorisierungsvorrichtung (100) überträgt, die eine Nachricht (212, 704) empfängt, die ein Zertifikat von einer Entität umfasst, und die eine Zertifikatswiderrufsliste (126) von der Zertifikatautorisierungsvorrichtung (100) empfängt; und
eine Zertifikatverifikationseinheit (206), die durch Vergleichen des Zertifikats mit der Zertifikatswiderrufsliste (126) bestimmt, ob das Zertifikat widerrufen ist,
wobei der geheime Wert (118, 210) ein Schlüssel ist, der in einem Wurzelknoten eines Schlüsselbaums enthalten ist, wobei der Schlüsselbaum aus dem Wurzelknoten und einer Vielzahl von Unterknoten besteht, wobei das Zertifikat einem Blattknoten des Schlüsselbaums entspricht;
wobei jeder Unterknoten einen Schlüssel enthält, der abgleitet wird durch Anwenden einer zufällig ausgewählten Hash-Funktion eines Hash-Funktionssatzes (128) auf den Schlüssel, der in seinem Elterknoten enthalten ist;
wobei das Zertifikat umfasst einen abgeleiteten Schlüssel, der in seinem entsprechenden Blattknoten des Schlüsselbaums enthalten ist, einen Index des Blattknotens, einen öffentlichen Schlüssel des öffentlichen/privaten Schlüsselpaares, eine Zertifikatautoritätssignatur und einen oder mehrere Indices einer oder mehrere zufällig ausgewählter Hash-Funktionen des Hash-Funktionssatzes, von dem der Schlüssel abgeleitet ist, der in dem Blattknoten enthalten ist;
wobei jeder Eintrag der Zertifikatswiderrufsliste umfasst einen abgeleiteten geheimen Schlüssel, einen Index des Elterknotens des Schlüsselbaums, der den abgeleiteten geheimen Schlüssel enthält, und eine Höhe des Elterknotens, der den abgeleiteten geheimen Schlüssel enthält; wobei der Elterknoten nicht der Wurzelknoten des Schlüsselbaums ist.

4. On-Board-Einheit nach Anspruch 3, wobei die Zertifikatverifizierungseinheit (206) bestimmt, ob der Index in dem Zertifikat in der Zertifikatwiderrufsliste (126) abgedeckt ist,
wobei, falls der Index in dem Zertifikat nicht in der Zertifikatswiderrufsliste (126) abgedeckt ist, die Zertifikatverifizierungseinheit (206) identifiziert, dass das Zertifikat als gültig angezeigt wird und die Nachricht akzeptiert wird; und
wobei, falls der Index in dem Zertifikat in der Zertifikatswiderrufsliste (126) abgedeckt ist, die Zertifikatverifikationseinheit (206) den abgeleiteten Schlüssel, der in dem Zertifikat enthalten ist, mit einem Hashwert des abgeleiteten geheimen Schlüssels vergleicht, der in der Zertifikationswiderrufsliste (126) enthalten ist, die durch die eine oder mehrere Hash-Funktionen, deren Indices in dem Zertifikat enthalten sind, gehasht ist, und wobei, falls der abgeleitete Schlüssel in dem Zertifikat mit dem Hash-Wert übereinstimmt, die Zertifikatverifizierungseinheit (206) identifiziert, dass das Zertifikat widerrufen ist und die Nachricht ignoriert wird.

5. Zertifikatswiderrufsverfahren, umfassend:
Empfangen eines Satzes widerrufener Zertifikate;
Erlangen mindestens eines abgeleiteten geheimen Schlüssels, der in einem Schlüsselbaum enthalten ist, wobei der Schlüsselbaum aus einem Wurzelknoten und einer Vielzahl von Unterknoten besteht, wobei jeder Blattknoten des Schlüsselbaums ein entsprechendes Zertifikat aufweist;
wobei jeder Unterknoten einen Schlüssel enthält, der abgleitet wird durch Anwenden einer zufällig ausgewählte Hash-Funktion eines Hash-Funktionssatzes (128) auf den Schlüssel, der in seinem Elterknoten enthalten ist;
wobei der wenigstens eine abgeleitete geheime Schlüssel in wenigstens einem gemeinsamen Elterknoten des Schlüsselbaums enthalten ist, wobei der wenigstens eine gemeinsame Elterknoten nicht der Wurzelknoten ist; und
Aktualisieren einer Zertifikatswiderrufsliste (126) durch Hinzufügen des wenigstens einen abgeleiteten geheimen Schlüssels, des Index des wenigstens einen gemeinsamen Elterknoten und einer Höhe des wenigstens einen gemeinsamen Elterknoten; und
Ausstrahlen der Zertifikatswiderrufsliste (126) an eine Vielzahl von Entitäten, wobei der wenigstens eine gemeinsame Elterknoten wenigstens ein gemeinsamer Elterknoten einer minimalen Anzahl von Unterbäumen ist, deren Blattknoten nur widerrufenen Zertifikaten des Satzes widerrufener Zertifikate entsprechen.

6. Zertifikatswiderrufsverfahren nach Anspruch 5, wobei jeder Eintrag der Zertifikatswiderrufsliste (126) umfasst einen abgeleiteten geheimen Schlüssel, einen Index des gemeinsamen Elterknotens und eine Höhe des gemeinsamen Elterknotens.

7. Zertifikatverifikationsverfahren, umfassend:
Empfangen einer Nachricht (212, 704), die ein Zertifikat von einer Entität (702) umfasst, und Empfangen einer Zertifikatwiderrufsliste (126) von einer Zertifikatautorisierungsvorrichtung (100);
Bestimmen, ob das Zertifikat widerrufen ist, durch Vergleichen des Zertifikats mit der Zertifikatwiderrufsliste (126); und
Akzeptieren der Nachricht (212, 704), falls das Zertifikat nicht widerrufen ist, und Ignorieren der Nachricht (212, 704), falls das Zertifikat widerrufen ist,
wobei der Schlüsselbaum aus einem Wurzelknoten und einer Vielzahl von Unterknoten besteht, wobei das Zertifikat einem Blattknoten des Schlüsselbaums entspricht;
wobei jeder Unterknoten einen Schlüssel enthält, der abgleitet wird durch Anwenden einer zufällig ausgewählten Hash-Funktion eines Hash-Funktionssatzes (128) auf den Schlüssel, der in seinem Elterknoten enthalten ist;
wobei das Zertifikat umfasst einen abgeleiteten Schlüssel, der in seinem entsprechenden Blattknoten des Schlüsselbaums enthalten ist, einen Index des Blattknotens, einen öffentlichen Schlüssel des öffentlichen/privaten Schlüsselpaares, eine Zertifikatautoritätssignatur und einen oder mehrere Indices einer oder mehrere zufällig ausgewählter Hash-Funktionen des Hash-Funktionssatzes, von dem der Schlüssel abgeleitet wird, der in dem Blattknoten enthalten ist;
wobei jeder Eintrag der Zertifikatswiderrufsliste umfasst einen abgeleiteten geheimen Schlüssel, einen Index des Eiterknotens des Schlüsselbaums, der den abgeleiteten geheimen Schlüssel enthält, und eine Höhe des Elterknotens, der den abgeleiteten geheimen Schlüssel enthält; wobei der Elterknoten nicht der Wurzelknoten des Schlüsselbaums ist.

8. Zertifikatverifizierungsverfahren nach Anspruch 7, ferner umfassend:
Bestimmen, ob der Index in dem Zertifikat in der Zertifikatwiderrufsliste (126) abgedeckt ist;
wobei, falls der Index nicht in der Zertifikatswiderrufsliste (126) abgedeckt ist, das Zertifikat als gültig angezeigt wird und die Nachricht akzeptiert wird; und
wobei, falls der Index in dem Zertifikat in der Zertifikatswiderrufsliste (126) abgedeckt ist, Vergleichen des abgeleiteten Schlüssels, der in dem Zertifikat enthalten ist, mit einem Hashwert des abgeleiteten geheimen Schlüssels, der in der Zertifikationswiderrufsliste (126) enthalten ist, die durch die eine oder mehreren Hash-Funktionen, deren Indices in dem Zertifikat enthalten sind, gehasht ist, und wobei, falls der abgeleitete Schlüssel in dem Zertifikat mit dem Hash-Wert übereinstimmt, das Zertifikat widerrufen wird und die Nachricht (212, 704) ignoriert wird.

## Revendications

1. Dispositif d'autorisation de certificat (100), comprenant :
une unité de génération de clé publique/privée (102) générant des paires de clés publiques/privées (116) ;
une unité de négociation de valeur secrète (104) négociant une valeur secrète (118) avec une entité, dans lequel la valeur secrète (118) est une clé contenue dans un noeud racine d'une arborescence de clé, dans lequel l'arborescence de clé est constituée du noeud racine et d'une pluralité de sous noeuds ;
dans lequel chaque sous noeud contient une clé ;
une unité de fonction de hachage (113) générant un ensemble de fonctions de hachage (128) ;
une unité de calcul informatique d'ensemble de clé (106) recevant la valeur secrète (118) provenant de l'unité de négociation de valeur secrète (104) et recevant l'ensemble de fonctions de hachage (128) provenant de l'unité de fonctions de hachage (113), dans lequel l'unité informatique d'ensemble de clé (106) génère un ensemble de clé déduit (120) de l'entité, dans lequel l'ensemble de clé déduit (120) est constitué d'une pluralité de clé déduites de la valeur secrète (118) et de l'ensemble de fonctions de hachage (128) ;
et dans lequel les clés contenues dans la pluralité de sous noeuds sont respectivement la pluralité de clés de l'ensemble de clé déduit (120) ;
une unité de génération de certificat (108) recevant les paires de clés publiques/privées (116) provenant de l'unité de génération de clé publique/privée (102) et de l'ensemble de clé déduit (120) provenant de l'unité de calcul informatique d'ensemble de clé (106), dans lequel l'unité de génération de certificat (108) génère pour chaque noeud feuille de l'arborescence de clé un certificat correspondant ;
dans lequel chaque certificat comprend la clé contenue dans son noeud feuille correspondant, un index de son noeud feuille correspondant, une clé publique des paires de clés publiques/privées, une signature d'autorité de certificat et un ou plusieurs indexes d'une ou plusieurs fonctions de hachage de l'ensemble de fonctions de hachage (128) d'après lesquelles la clé contenue dans son noeud feuille correspondant est déduite ;
une unité de révocation de certificat (110) acquérant au moins une clé secrète déduite contenue dans au moins un noeud parent commun d'un nombre minimal de sous-arborescences dont les deux feuilles correspondent seulement aux certificats révoqués d'un ensemble de certificats révoqués et mettant à jour une liste de révocation de certificat (126) en ajoutant ladite au moins une clé secrète déduite, l'index dudit au moins un noeud parent commun et une hauteur dudit au moins un noeud parent commun ; et
une unité de diffusion de liste de révocation de certificat (112) recevant la liste de révocation de certificat (126) et diffusant la liste de révocation de certificat (126),
dans lequel l'ensemble de clé déduit de chacun des sous noeuds est généré en appliquant de manière aléatoire une fonction de hachage sélectionnée de l'ensemble de fonctions de hachage (128) à la clé contenue dans le noeud parent dudit sous noeud ; et
dans lequel ledit noeud parent n'est pas le noeud racine de l'arborescence de clé.

2. Dispositif d'autorisation de certificat selon la revendication 1, dans lequel l'unité de calcul informatique d'ensemble de clé (106) détermine une hauteur de l'arborescence de clé par le nombre des certificats demandés par l'entité.

3. Unité embarquée (200), comprenant:
une unité de négociation de valeur secrète (202) négociant une valeur secrète (118,210) avec un dispositif d'autorisation de certificat (100) ;
une unité de communication (204) transférant la valeur secrète (118,210) au dispositif d'autorisation de certificat (100), recevant (212,704) un message comprenant un certificat provenant d'une entité et recevant une liste de révocation de certificat (126) provenant du dispositif d'autorisation de certificat (100) ; et
une unité de vérification de certificat (206) déterminant si le certificat est révoqué en comparant le certificat avec la liste de révocation de certificat (126),
dans lequel la valeur secrète (118,210) est une clé contenue dans un noeud racine d'une arborescence de clé, dans lequel l'arborescence de clé est constituée du noeud racine d'une pluralité de sous noeuds ;
dans lequel le certificat correspond à un noeud feuille de l'arborescence de clé ;
dans lequel le certificat comprend une clé déduite contenue dans son noeud feuille correspondant de l'arborescence de clé, un index du noeud feuille, une clé publique des paires de clés publiques/privées, une signature d'autorité de certificat et un ou plusieurs indexes d'une ou plusieurs fonctions de hachage sélectionnées de manière aléatoire de l'ensemble de fonctions de hachage d'après lequel la clé contenue dans le noeud feuille est déduite ;
dans lequel chaque entrée de la liste de révocation de certificat comprend une clé secrète déduite, un index du noeud parent de l'arborescence de clé qui contient la clé secrète déduite et une hauteur du noeud parent qui contient la clé secrète déduite dans lequel ledit noeud parent n'est pas le noeud racine de l'arborescence de clé.

4. Unité embarquée selon la revendication 3, dans lequel l'unité de vérification de certificat (206) détermine si l'index dans le certificat est couvert dans la liste de révocation de certificat (126),
si l'index dans le certificat n'est pas couvert dans la liste de révocation de certificat, l'unité de vérification de certificat (206) identifie que le certificat est indiqué valide et le message est accepté ; et
si l'index dans le certificat est couvert dans la liste de révocation de certificat (126), l'unité de vérification de certificat (126) compare ladite clé déduite incluse dans le certificat avec une valeur hachée de ladite clé secrète déduite incluse dans la liste de révocation de certificat (126) hachée par une ou plusieurs fonctions de hachage dont les indexes sont inclus dans le certificat et si la clé déduite dans le certificat concorde avec la valeur hachée, l'unité de vérification de certificat (206) identifie que le certificat est révoqué et il n'est pas tenu compte du message.

5. Procédé de révocation de certificat, comprenant de :
recevoir un ensemble de certificat révoqué ;
acquérir au moins une clé secrète déduite contenue dans une arborescence de clé dans lequel l'arborescence de clé est constituée d'un noeud racine et d'une pluralité de sous noeuds ;
dans lequel chaque noeud feuille de l'arborescence de clé a un certificat correspondant ;
dans lequel chaque sous noeud contient une clé qui est déduite en appliquant une fonction de hachage sélectionnée de manière aléatoire d'un ensemble de fonctions de hachage (128) à la clé contenue dans son noeud parent ;
dans lequel ladite au moins une clé secrète déduite est contenue dans au moins un noeud parent commun de l'arborescence de clé, dans lequel ledit au moins un noeud parent commun n'est pas le noeud racine ;
et mettre à jour une liste de révocation de certificat (126) en ajoutant ladite au moins une clé secrète déduite, l'index dudit au moins un noeud parent commun et une hauteur dudit au moins un noeud parent commun ;
diffuser la liste de révocation de certificat (126) à une pluralité d'entités, dans lequel ledit au moins un noeud parent commun est au moins un noeud parent commun d'un nombre minimal de sous-arborescences dont les noeuds de feuilles correspondent seulement aux certificats révoqués de l'ensemble de certificats révoqués.

6. Procédé de révocation de certificat selon la revendication 5, dans lequel chaque entrée de la liste de révocation de certificat (126) comprend une clé secrète déduite, un index du noeud parent commun et une hauteur du noeud parent commun.

7. Procédé de vérification de certificat, comprenant de :
recevoir un message (212,704) comprenant un certificat provenant d'une entité (702) et recevoir une liste de révocation de certificat (126) provenant d'un dispositif d'autorisation de certificat (100) ;
déterminer si le certificat est révoqué en comparant le certificat avec la liste de révocation de certificat (126) ; et
accepter le message (212,704) si le certificat n'est pas révoqué et ne pas tenir compte du message (212,704) si le certificat est révoqué,
dans lequel l'arborescence de clé est constituée d'un noeud racine et d'une pluralité de sous noeuds ;
dans lequel le certificat correspond à un noeud feuille de l'arborescence de clé ;
dans lequel le certificat comprend une clé déduite contenue dans son noeud feuille correspondant de l'arborescence de clé, un index du noeud feuille, une clé publique des paires de clés publiques/privées, une signature d'autorité de certificat et un ou plusieurs indexes d'une ou plusieurs fonctions de hachage sélectionnées de manière aléatoire de l'ensemble de fonctions de hachage d'après lequel la clé contenue dans le noeud feuille est déduite ;
dans lequel chaque entrée de la liste de révocation de certificat comprend une clé secrète déduite, un index du noeud parent de l'arborescence de clé qui contient la clé secrète déduite et une hauteur du noeud parent qui contient la clé secrète déduite dans lequel ledit noeud parent n'est pas le noeud racine de l'arborescence de clé.

8. Procédé de vérification de certificat selon la revendication 7, comprenant en outre de :
déterminer si l'index dans le certificat est couvert dans la liste de révocation de certificat (126) ;
si l'index dans le certificat n'est pas couvert dans la liste de révocation de certificat (126), le certificat est indiqué valide et le message (212,704) est accepté ; et
si l'index est couvert dans la liste de révocation de certificat (126), comparer ladite clé déduite incluse dans le certificat avec une valeur hachée de ladite clé secrète déduite dans la liste de révocation de certification (126) hachée par une ou plusieurs fonctions de hachage dont les indexes sont inclus dans le certificat, et si la clé déduite dans le certificat concorde avec la valeur hachée, le certificat est révoqué et il n'est pas tenu compte du message (212,704).
